# EUROPEAN PATENT APPLICATION

(11) **EP 4 631 656 A1**
(43) Date of publication of application: **15.10.2025**
(21) Application number: 23899415.6
(22) Date of filing: 18.07.2023
(51) Int. Cl.: B23B 51/00

(54) **EFFICIENT DRILLING TOOL WITH STRONG CHIP REMOVAL CAPACITY**

(30) Priority: 08.12.2022 CN 202211576287
(71) Applicant: Zhuzhou Cemented Carbide Cutting Tools Co., Ltd., Zhuzhou, Hunan 412007 (CN)
(72) Inventor: JIANG, Aisheng, Zhuzhou, Hunan 412007 (CN); WANG, Shequan, Zhuzhou, Hunan 412007 (CN); WANG, Yuzhong, Zhuzhou, Hunan 412007 (CN); WU, Huofei, Zhuzhou, Hunan 412007 (CN); YU, Renchao, Zhuzhou, Hunan 412007 (CN); CHEN, Peiwen, Zhuzhou, Hunan 412007 (CN)
(74) Representative: Behr, Wolfgang
(86) International application number: PCT/CN2023/107833
(87) International publication number: WO 2024/119830

(57) **Abstract**

Disclosed in the present invention is an efficient drilling tool with a strong chip removal capacity. The drilling tool comprises a rotating tool holder (1), a core cutting insert (2) and a peripheral cutting insert (3), wherein the rotating tool holder (1) comprises a cutting end (11), a clamping handle (12), and a peripheral surface (13) located between the cutting end (11) and the clamping handle (12); the clamping handle (12) and the peripheral surface (13) are both symmetrical about a central axis (9) of the rotating tool holder (1); the cutting end (11) is provided with a core cutter slot (51) and a peripheral cutter slot (52), and the core cutting insert (2) and the peripheral cutting insert (3) are installed in the core cutter slot (51) and the peripheral cutter slot (52) respectively; the peripheral surface (13) is provided with a core chip pocket (71) and a peripheral chip pocket (72) that communicate with the core cutter slot (51) and the peripheral cutter slot (52) respectively; the core chip pocket (71) comprises a circular recessed surface (711) at the bottom and straight cutting surfaces (712) located on two sides of the circular recessed surface (711); the peripheral chip pocket (72) comprises a flat recessed surface (721) at the bottom and slanted side surfaces (722) located on two sides of the flat recessed surface (721); and the straight cutting surfaces (712) and the slanted side surfaces (722) appear as straight lines in a radial section of the drilling tool. The present invention has the advantages of a strong chip removal capacity, a good anti-vibration effect, a great drilling depth, etc.

## Description

### CROSS REFERENCE TO THE RELATED APPLICATIONS

This application is based on and claims priority to Chinese Patent Application No. 202211576287.3 filed on December 08, 2022 and entitled "Efficient drilling tool with a strong chip removal ability", the disclosure of which is hereby incorporated by reference in its entirety as part of this application.

### [Technical Field]

The invention mainly relates to the field of machining of metals and, in particular, to an efficient drilling tool with a strong chip removal ability.

### [Background Technology]

Due to the scarcity, high cost, and poor machinability of cemented carbide materials, the use cost of one-piece cemented carbide drilling tools is relatively high, limiting their use. As a result, there is a greater reliance on split-type drilling tools, where cutting components are made of cemented carbide and clamping components are made of low-hardness steel. When the cutting components wear out, they can be replaced individually. These drilling tools offer excellent cost-effectiveness and have been widely used.

For drilling tools with steel clamping components, a cutting part of the tool completely goes deep into a workpiece during drilling and forms a closed area with the workpiece, making it difficult to curl and discharge chips. To ensure the cutting performance of the drilling tools, the drilling tools are generally provided with large chip pockets. A helical recess with a U-shaped arc bottom is structured as the chip pocket to enhance chip removal capacity. That is, the chip pockets corresponding to a core insert and a peripheral insert are the same U-shaped arc bottom structures. Such drilling tools have a simple structure and are easy to manufacture. However, the cutting speeds of core and peripheral cutter slots differ significantly, resulting in considerable variations in the shape of the chips produced by the core and peripheral inserts. The chip removal abilities of the core and peripheral chip pockets are not the same. To ensure that both the core and peripheral cutter slots can effectively remove chips, the drilling tools typically have a thinner core, which reduces the rigidity of a tool holder, leading to small drilling depths and low drilling efficiency of the tools.

### [Content of The Invention]

The technical problems to be solved by the invention are to overcome the shortcomings present in the prior art and provide an efficient drilling tool with a strong chip removal ability, excellent vibration resistance, and greater drilling depth.

In order to solve the above technical problems, the invention adopts the following technical solutions:
An efficient drilling tool with a strong chip removal ability, comprising a rotating tool holder , a core cutting insert , and a peripheral cutting insert , wherein the rotating tool holder comprises a cutting end, a clamping handle , and a peripheral surface located between the cutting end and the clamping handle ; the clamping handle and the peripheral surface are both symmetrical about a central axis of the rotating tool holder ; the cutting end is provided with a core cutter slot and a peripheral cutter slot, and the core cutting insert and the peripheral cutting insert are installed in the core cutter slot and the peripheral cutter slot respectively; the peripheral surface is provided with a core chip pocket and a peripheral chip pocket that communicate with the core cutter slot and the peripheral cutter slot respectively; the core chip pocket comprises a circular recessed surface at the bottom and straight cutting surfaces located on two sides of the circular recessed surface ; the peripheral chip pocket comprises a flat recessed surface at the bottom and slanted side surfaces located on two sides of the flat recessed surface ; and the straight cutting surfaces and the slanted side surfaces appear as straight lines in a radial section of the drilling tool.

In the radial section of the drilling tool, a minimum radial distance L between the circular recessed surface and the flat recessed surface satisfies 0.15D≤L≤0.3D, where D is a cutting diameter of the drilling tool.

In the radial section of the drilling tool, a minimum radial distances L1 between the circular recessed surface and the central axis and a minimum radial distances L2 between the flat recessed surface and the central axis satisfy 0.03D≤L2-L1≤0.08D.

In the radial section of the drilling tool, a radius R of the circular recessed surface satisfies 0.4D≤R≤0.6D.

In the radial section of the drilling tool, a maximum width W between the slanted side surfaces on two sides satisfies 0.4D≤R≤0.6D.

In the radial section of the drilling tool, a fillet surface is provided between the flat recessed surface and any of the slanted side surfaces , the fillet surface is set lower than the flat recessed surface , and a radial distance H from a lowest point of the fillet surface to the flat recessed surface satisfies 0.02D≤H≤0.1D.

The circular recessed surface and the straight cutting surfaces on the two sides thereof form an axisymmetric curve in the radial section of the drilling tool, with the axis of symmetry being a core centerline that passes through the central axis .

The straight lines presented by the straight cutting surfaces on two sides in the radial section of the drilling tool are parallel to the core centerline .

In the radial section of the drilling tool, the flat recessed surface appears as a straight line and is symmetrical about a peripheral centerline that passes through a midpoint of the straight line and the central axis.

In the radial section of the drilling tool, angles α1 and α2 between the slanted side surfaces on two sides and the peripheral centerline satisfy 10°≤α1≤40°, 10°≤α2≤40°.

A drilling depth DL of the drilling tool satisfies 3D≤DL≤9D.

In a direction from the cutting end to the clamping handle , the core chip pocket and the peripheral chip pocket each comprise a spiral groove , a smooth groove, a straight groove , and a tail groove , that are arranged in sequence; and in the radial section of the drilling tool, an angle α3 between the core centerline and the peripheral centerline in the section of the spiral groove satisfies 3°≤α3≤10°.

In the radial section of the drilling tool, the core centerline and the peripheral centerline are parallel to each other in the section of the straight groove .

In a direction of the central axis , the core chip pocket and the peripheral chip pocket each have a spiral rise angle α4 on the peripheral surface and the spiral rise angle α4 satisfies 15°≤α3≤35°.

Compared with the prior art, the invention has the following advantages:
According to the efficient drilling tool with a strong chip removal ability provided by the invention, a core chip pocket comprises a circular recessed surface at the bottom and straight cutting surfaces on two sides of the circular recessed surface, a peripheral chip pocket comprises a flat recessed surface at the bottom and slanted side surfaces on two sides of the flat recessed surface, and the straight cutting surfaces and the slanted side surfaces appear as straight lines in a radial section of the drilling tool. By configuring the core chip pocket and the peripheral chip pocket with different structures that correspond to the actual chip shapes produced by the core cutter slot and the peripheral cutter slot, smooth chip removal is achieved. This design effectively utilizes the spatial structure of the core chip pocket and the peripheral chip pocket, ensures the chip removal abilities of the core chip pocket and the peripheral chip pocket and the rigidity of the drilling tool without reducing the core thickness of the drilling tool, thus improving the drilling size accuracy, drilling surface quality, and maximum allowable drilling depth of the drilling tool, and achieving stable cutting even if the overhang/diameter ratio of the drilling tool reaches 9. This solution addresses the technical challenge of synchronously enhancing the chip removal ability and rigidity of drilling tools in the industry, and significantly increases the cutting depth and cutting efficiency of the drilling tool.

### [Description of the Drawings]

FIG. 1 is a perspective view of an efficient drilling tool with a strong chip removal ability according to the invention;
FIG. 2 is a front view of an efficient drilling tool with a strong chip removal ability according to the invention;
FIG. 3 is a sectional view of FIG. 2 cut along A-A;
FIG. 4 is a sectional view of FIG. 2 cut along B-B;
FIG. 5 is a schematic diagram of chips produced by a core chip pocket of an efficient drilling tool with a strong chip removal ability according to the invention; and
FIG. 6 is a schematic diagram of chips produced by a peripheral chip pocket of an efficient drilling tool with a strong chip removal ability according to the invention.

### Reference numerals:

1. Rotating tool holder; 11. Cutting end; 12. Clamping handle; 13. Peripheral surface; 2. Core cutting insert; 3. Peripheral cutting insert; 51. Core cutter slot; 52. Peripheral cutter slot; 71. Core chip pocket; 711. Circular recessed surface; 712. Straight cutting surface; 72. Peripheral chip pocket; 721. Flat recessed surface; 722. Slanted side surface; 723. Fillet surface; 7a. Spiral groove; 7b. Smooth groove; 7c. Straight groove; 7d. Tail groove; 81. Core centerline; 82. Peripheral centerline; 9. Central axis.

### [Specific Implementations]

The invention will be further described in detail with reference to the accompanying drawings and specific embodiments.

In the description of the invention, it should be noted that orientation or positional relationships indicated by terms such as "center", "up", "down", "horizontal", "inside", "outside", "top" and "bottom" are based on the orientation or positional relationships shown in the accompanying drawings, and are for convenience of describing the invention and simplifying the description only, rather than indicating or implying that the device or element referred to must have a specific orientation or be constructed and operated in a specific orientation, and therefore should not be construed as limiting the invention.

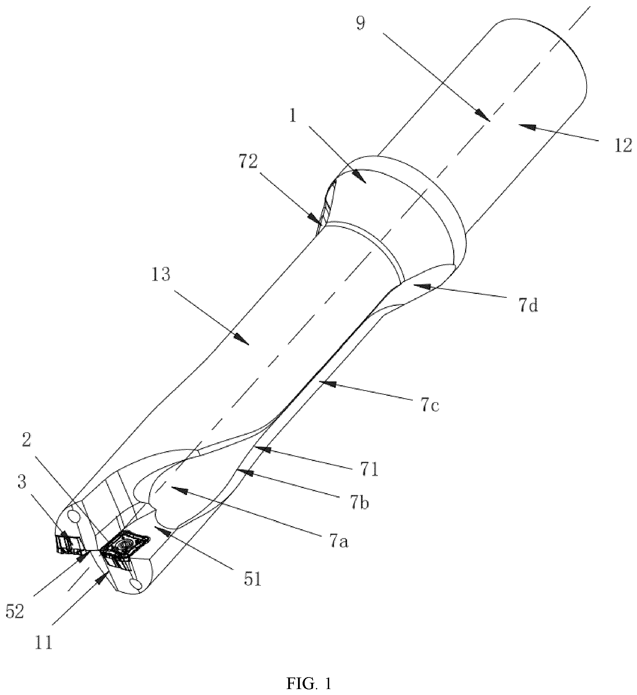

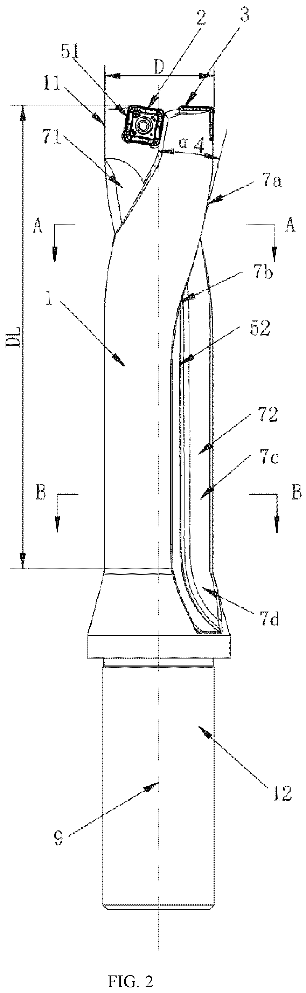

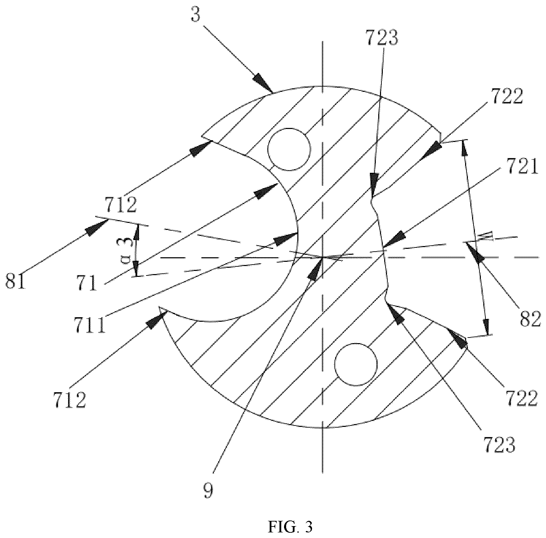

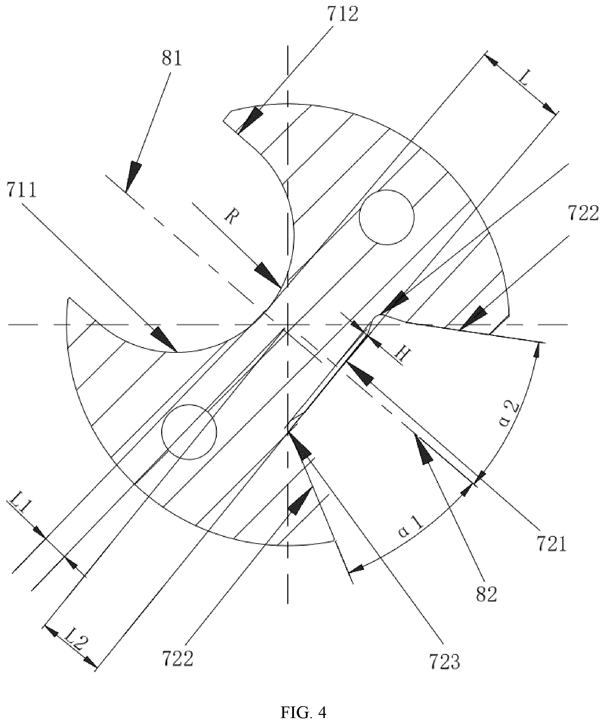

FIGS. 1 to 4 illustrate an embodiment of an efficient drilling tool with a strong chip removal ability according to the invention. The efficient drilling tool with a strong chip removal ability in this embodiment comprises a rotating tool holder 1, a core cutting insert 2, and a peripheral cutting insert 3. The rotating tool holder 1 comprises a cutting end 11, a clamping handle 12, and a peripheral surface 13 located between the cutting end 11 and the clamping handle 12. The clamping handle 12 and the peripheral surface 13 are both symmetrical about a central axis 9 of the rotating tool holder 1. The cutting end 11 is provided with a core cutter slot 51 and a peripheral cutter slot 52, and the core cutting insert 2 and the peripheral cutting insert 3 are installed in the core cutter slot 51 and the peripheral cutter slot 52 respectively. The peripheral surface 13 is provided with a core chip pocket 71 and a peripheral chip pocket 72 that communicate with the core cutter slot 51 and the peripheral cutter slot 52 respectively. The core chip pocket 71 comprises a circular recessed surface 711 at the bottom and straight cutting surfaces 712 located on two sides of the circular recessed surface 711. The peripheral chip pocket 72 comprises a flat recessed surface 721 at the bottom and slanted side surfaces 722 located on two sides of the flat recessed surface 721; and the straight cutting surfaces 712 and the slanted side surfaces 722 appear as straight lines in a radial section of the drilling tool. By configuring the core chip pocket 71 and the peripheral chip pocket 72 with different structures that correspond to the actual chip shapes produced by the core cutter slot 51 and the peripheral cutter slot 52, smooth chip removal is achieved. This design effectively utilizes the spatial structure of the core chip pocket 71 and the peripheral chip pocket 72 and ensures the chip removal abilities of the core chip pocket 71 and the peripheral chip pocket 72 and the rigidity of the drilling tool without reducing the core thickness of the drilling tool, thus improving the drilling size accuracy, drilling surface quality, and maximum allowable drilling depth of the drilling tool, and achieving stable cutting even if the overhang/diameter ratio of the drilling tool reaches 9. This solution addresses the technical challenge of synchronously enhancing the chip removal ability and rigidity in drilling tools, and significantly increases the cutting depth and the cutting efficiency of the drilling tool.

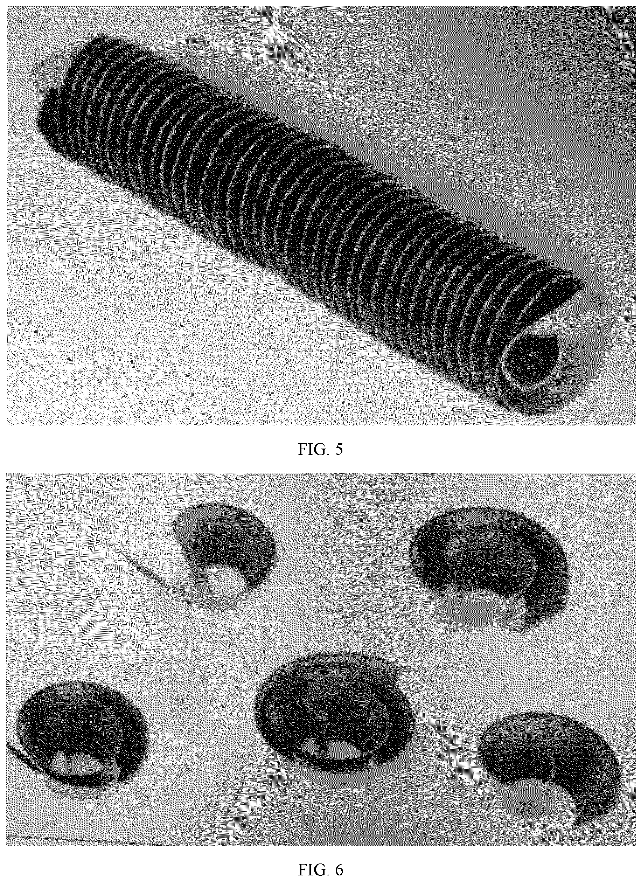

As shown in FIG. 5, the core cutting insert 2 produces spiral pyramid-shaped chips, with an axial section resembling a circle. As shown in FIG. 6, the peripheral cutting insert 3 generates frustoconical chips, with a side profile resembling a trapezoid. The core chip pocket 71 is designed to consist of a circular recessed surface 711 and parallel straight cutting surfaces 712, and the peripheral chip pocket 72 is designed to consist of a flat recessed surface 721 and intersecting slanted side surfaces 722. The core chip pocket 71 has an excellent ability to discharge pyramid-shaped chips, and the peripheral chip pocket 72 effectively discharges frustoconical chips. Despite the small space within the core chip pocket 71 and the peripheral chip pocket 72, the core chip pocket 71 and the peripheral chip pocket 72 still demonstrate strong chip removal abilities, significantly enhancing the rigidity of the rotating tool holder 1 of the drilling tool.

In this embodiment, to ensure both the rigidity of the rotating tool holder 1 and the drilling depth of the drilling tool while improving drilling accuracy and processing efficiency, in the radial section of the drilling tool, a minimum radial distance L between the circular recessed surface 711 and the flat recessed surface 721 satisfies 0.15D≤L≤0.3D, where D is a cutting diameter of the drilling tool. In this embodiment, L=0.25D.

In this embodiment, to ensure the ability to discharge chips of specific shapes from the circular recessed surface 711 of the core chip pocket 71 and the flat recessed surface 721 of the peripheral chip pocket 72, in the radial section of the drilling tool, a minimum radial distance L1 between the circular recessed surface 711 and the central axis 9 and a minimum radial distance L2 between the flat recessed surface 721 and the central axis 9 satisfy 0.03D≤L2-L1≤0.08D. In this embodiment, L2=0.15D, L1=0.1D.

In this embodiment, to precisely control the flow direction of chips within the core chip pocket 71, in the radial section of the drilling tool, a radius R of the circular recessed surface 711 satisfies 0.4D≤R≤0.6D. In this embodiment, R=0.5D.

In this embodiment, to control the size of a contact area between the chips in the peripheral chip pocket 72 and a drill hole, in the radial section of the drilling tool, a maximum width W between the slanted side surfaces 722 on two sides satisfies 0.4D≤R≤0.6D. In this embodiment, W=0.12D.

In this embodiment, in the radial section of the drilling tool, a fillet surface 723 is provided between the flat recessed surface 721 and any of the slanted side surfaces 722, the fillet surface 723 is arranged lower than the flat recessed surface 721, and a radial distance H from a lowest point of the fillet surface 723 to the flat recessed surface 721 satisfies 0.02D≤H≤0.1D. This ensures that as the chips produced by the peripheral cutting insert 3 roll on the flat recessed surface 721, the chips are only in contact with the flat recessed surface 721, and do not experience pressure or contact at the intersection with the slanted side surface 722 and the flat recessed surface 721, thus avoiding the formation of irregular chips and greatly enhancing cutting stability.

In this embodiment, the circular recessed surface 711 and the straight cutting surfaces 712 on the two sides thereof form an axisymmetric curve in the radial section of the drilling tool, with the axis of symmetry being a core centerline 81 that passes through the central axis 9. In the radial section of the drilling tool, the straight lines presented by the straight cutting surfaces 712 on two sides are parallel to the core centerline 81. In the radial section of the drilling tool, the flat recessed surface 721 appears as a straight line and is symmetrical about a peripheral centerline 82 that passes through a midpoint of the straight line and the central axis 9. This design improves the chip removal smoothness of the core chip pocket 71 and the peripheral chip pocket 72, and reduces the processing difficulty of the core chip pocket 71 and the peripheral chip pocket 72.

In this embodiment, to ensure that the frustoconical chips in the core chip pocket 71 and the peripheral chip pocket 72 are discharged quickly, in the radial section of the drilling tool, angles α1 and α2 between the slanted side surfaces 722 on two sides and the peripheral centerline 82 satisfy 10°≤α1≤40°, 10°≤α2≤40°. In this embodiment, α1=α2=30°.

In this embodiment, a drilling depth DL of the drilling tool satisfies 3D≤DL≤9D.

In this embodiment, in a direction from the cutting end 11 to the clamping handle 12, the core chip pocket 71 and the peripheral chip pocket 72 each comprise a spiral groove 7a, a smooth groove 7b, a straight groove 7c, and a tail groove 7d, that are arranged in sequence. To improve the drilling accuracy and rigidity of the drilling tool, in the radial section of the drilling tool, an angle α3 between the core centerline 81 and the peripheral centerline 82 in the section of the spiral groove 7a satisfies 3°≤α3≤10°. In this embodiment, α3=5°.

In this embodiment, in the radial section of the drilling tool, the core centerline 81 and the peripheral centerline 82 are parallel to each other in the section of the straight groove 7c.

In this embodiment, in a direction of the central axis 9, the core chip pocket 71 and the peripheral chip pocket 72 each have a spiral rise angle α4 on the peripheral surface 13. To ensure that during the drilling process, chips generated from machining the core and peripheral areas of different materials can be discharged quickly, the spiral rise angle α4 satisfies 15°≤α3≤35°. In this embodiment, α4=25°.

Described above are merely preferred embodiments of the present invention, and are not intended to limit the present invention in any form. Although the present invention is disclosed as above in preferred embodiments, which are not intended to limit the present invention. Without departing from the spiritual essence and technical solutions of the present invention, any skilled person familiar with the art can make numerous possible variations and modifications to the technical solutions of the present invention, or amend these technical solutions into equivalent embodiments with equal changes, by using the methods and technical content disclosed above. Therefore, without departing from the contents of the technical solutions of the present invention, any simple alternations, equivalent substitutions, equivalent changes and modifications made to the embodiments above based on the technical essence of the present invention shall be construed as falling within the protection scope of the technical solutions of the present invention.

## Claims

1. An efficient drilling tool with a strong chip removal ability, comprising a rotating tool holder (1), a core cutting insert (2), and a peripheral cutting insert (3), wherein the rotating tool holder (1) comprises a cutting end (11), a clamping handle (12), and a peripheral surface (13) located between the cutting end (11) and the clamping handle (12); the clamping handle (12) and the peripheral surface (13) are both symmetrical about a central axis (9) of the rotating tool holder (1); the cutting end (11) is provided with a core cutter slot (51) and a peripheral cutter slot (52), and the core cutting insert (2) and the peripheral cutting insert (3) are installed in the core cutter slot (51) and the peripheral cutter slot (52) respectively; the peripheral surface (13) is provided with a core chip pocket (71) and a peripheral chip pocket (72) that communicate with the core cutter slot (51) and the peripheral cutter slot (52) respectively; the core chip pocket (71) comprises a circular recessed surface (711) at the bottom and straight cutting surfaces (712) located on two sides of the circular recessed surface (711); the peripheral chip pocket (72) comprises a flat recessed surface (721) at the bottom and slanted side surfaces (722) located on two sides of the flat recessed surface (721); and the straight cutting surfaces (712) and the slanted side surfaces (722) appear as straight lines in a radial section of the drilling tool.

2. The efficient drilling tool with a strong chip removal ability according to claim 1, wherein in the radial section of the drilling tool, a minimum radial distance L between the circular recessed surface (711) and the flat recessed surface (721) satisfies 0.15D≤L≤0.3D, where D is a cutting diameter of the drilling tool.

3. The efficient drilling tool with a strong chip removal ability according to claim 2, wherein in the radial section of the drilling tool, a minimum radial distances L1 between the circular recessed surface (711) and the central axis (9) and a minimum radial distances L2 between the flat recessed surface (721) and the central axis (9) satisfy 0.03D≤L2-L1≤0.08D.

4. The efficient drilling tool with a strong chip removal ability according to claim 2, wherein in the radial section of the drilling tool, a radius R of the circular recessed surface (711) satisfies 0.4D≤R≤0.6D.

5. The efficient drilling tool with a strong chip removal ability according to claim 2, wherein in the radial section of the drilling tool, a maximum width W between the slanted side surfaces (722) on two sides satisfies 0.4D≤R≤0.6D.

6. The efficient drilling tool with a strong chip removal ability according to claim 2, wherein in the radial section of the drilling tool, a fillet surface (723) is provided between the flat recessed surface (721) and any of the slanted side surfaces (722), the fillet surface (723) is set lower than the flat recessed surface (721), and a radial distance H from a lowest point of the fillet surface (723) to the flat recessed surface (721) satisfies 0.02D≤H≤0.1D.

7. The efficient drilling tool with a strong chip removal ability according to any one of claims 1-6, wherein the circular recessed surface (711) and the straight cutting surfaces (712) on the two sides thereof form an axisymmetric curve in the radial section of the drilling tool, with the axis of symmetry being a core centerline (81) that passes through the central axis (9).

8. The efficient drilling tool with a strong chip removal ability according to claim 7, wherein the straight lines presented by the straight cutting surfaces (712) on two sides in the radial section of the drilling tool are parallel to the core centerline (81).

9. The efficient drilling tool with a strong chip removal ability according to claim 7, wherein in the radial section of the drilling tool, the flat recessed surface (721) appears as a straight line and is symmetrical about a peripheral centerline (82) that passes through a midpoint of the straight line and the central axis (9).

10. The efficient drilling tool with a strong chip removal ability according to claim 9, wherein in the radial section of the drilling tool, angles α1 and α2 between the slanted side surfaces (722) on two sides and the peripheral centerline (82) satisfy 10°≤α1≤40°, 10°≤α2≤40°.

11. The efficient drilling tool with a strong chip removal ability according to any one of claims 1-6, wherein a drilling depth DL of the drilling tool satisfies 3D≤DL≤9D.

12. The efficient drilling tool with a strong chip removal ability according to claim 9, wherein in a direction from the cutting end (11) to the clamping handle (12), the core chip pocket (71) and the peripheral chip pocket (72) each comprise a spiral groove (7a), a smooth groove (7b), a straight groove (7c), and a tail groove (7d), that are arranged in sequence; and in the radial section of the drilling tool, an angle α3 between the core centerline (81) and the peripheral centerline (82) in the section of the spiral groove (7a) satisfies 3°≤α3≤10°.

13. The efficient drilling tool with a strong chip removal ability according to claim 12, wherein in the radial section of the drilling tool, the core centerline (81) and the peripheral centerline (82) are parallel to each other in the section of the straight groove (7c).

14. The efficient drilling tool with a strong chip removal ability according to any one of claims 1-6, wherein in a direction of the central axis (9), the core chip pocket (71) and the peripheral chip pocket (72) each have a spiral rise angle α4 on the peripheral surface (13) and the spiral rise angle α4 satisfies 15°≤α3≤35°.
